# EUROPÄISCHE PATENTSCHRIFT

(11) **EP 4 718 786 B1**
(45) Veröffentlichungstag und Bekanntmachung des Hinweises auf die Patenterteilung: **24.06.2026**
(21) Anmeldenummer: 24202422.2
(22) Anmeldetag: 25.09.2024
(51) Int. Cl.: H04L 12/46

(54) **VERFAHREN ZUR REDUNDANTEN DATENÜBERMITTLUNG IN EINEM KOMMUNIKATIONSNETZ, KOMMUNIKATIONSSYSTEM UND KONFIGURATIONSVORRICHTUNG**
METHOD FOR THE REDUNDANT TRANSMISSION OF DATA IN A COMMUNICATION NETWORK, COMMUNICATION SYSTEM AND CONFIGURATION DEVICE
PROCÉDÉ DE TRANSMISSION REDONDANTE DE DONNÉES DANS UN RÉSEAU DE COMMUNICATION, SYSTÈME DE COMMUNICATION ET DISPOSITIF DE CONFIGURATION

(43) Veröffentlichungstag der Anmeldung: 01.04.2026
(73) Patentinhaber: Siemens Aktiengesellschaft, 80333 München (DE)
(72) Erfinder: Steindl, Günter, 92284 Poppenricht (DE)
(74) Vertreter: Siemens Patent Attorneys

(56) Entgegenhaltungen:
- US-A1- 2008 101 386
- US-A1- 2008 253 385
- US-A1- 2011 033 047

## Beschreibung

Die vorliegende Erfindung betrifft ein Verfahren zur redundanten Datenübermittlung in einem Kommunikationsnetz, insbesondere zur Übermittlung von Steuerungsdaten in einem industriellen Automatisierungssystem, ein zur Durchführung des Verfahrens geeignetes Kommunikationssystem sowie eine Konfigurationsvorrichtung, beispielsweise ein Engineering System oder einen Central Network Controller.

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet.

Aufgrund einer Nutzung für häufig äußerst unterschiedliche Anwendungen können in Ethernetbasierten Kommunikationsnetzen beispielsweise Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann dazu führen, dass Datenströme oder Datenrahmen mit Echtzeitanforderungen nicht entsprechend einer angeforderten bzw. benötigten Dienstgüte übermittelt werden.

EP 2 127 329 B1 betrifft ein Verfahren zur Filterung redundanter Frames, die zumindest eine MAC-Quelladresse, eine FramelD sowie einen CRC-Wert aufweisen, in einem Netzwerkknoten mit zumindest zwei Ports mit jeweils einer Sende- und einer Empfangseinrichtung. Die Sendeeinrichtung weist eine Sendeliste auf, in der zu sendende Frames gespeichert werden. Die Empfangseinrichtung weist einen Empfangsspeicher zum Speichern eines empfangenen Frames auf. Um redundante Frames in einem Netzwerkknoten eines Netzwerkes zu filtern, wird nach Empfang eines ersten Frames an einem der zumindest zwei Ports der Empfangseinrichtung in der Sendeliste des einen der zumindest zwei Ports nach einem zweiten Frame mit gleicher MAC-Quelladresse und FramelD gesucht. Bei Vorhandensein des zweiten Frames wird der erste Frame weder an eine lokale Applikation noch zum Senden an andere Ports weitergeleitet.

In EP 2 343 857 B1 ist ein Netzknoten für ein Kommunikationsnetz beschrieben, das ein erstes Teilnetz und ein mit diesem verbundenes zweites Teilnetz umfasst. Während im ersten Teilnetz ein Spannbaum-Protokoll verwendet wird, wird im zweiten Teilnetz ein sich vom Protokoll des ersten Teilnetzes unterscheidendes zweites Protokoll verwendet. Der Netzknoten ist als ein Element für das zweite Teilnetz eingerichtet und zur Kommunikation innerhalb des zweiten Teilnetzes ausgebildet. Darüber hinaus ist der Netzknoten mittels einer Spannbaum-Funktionalität als ein Spannbaum-Hauptknoten zur Überwachung und Steuerung des zweiten Teilnetzes ausgebildet und eingerichtet. Damit kann das zweite Teilnetz vom im ersten Teilnetz verwendeten Spannbaum-Protokoll als ein virtueller Netzknoten behandelt werden, indem der Netzknoten als Spannbaum-Hauptknoten für andere Netzknoten des zweiten Teilnetzes eine Spannbaum-Protokoll-Anwendung vornimmt.

Aus EP 2 693 700 B1 ist ein Verfahren zur Nachrichtenübermittlung in einem redundant betreibbaren Kommunikationsnetz bekannt, das ein erstes Teilnetz mit Baumtopologie und ein zweites Teilnetz umfasst. Im ersten Teilnetz werden Nachrichten entsprechend einem Spannbaum-Protokoll übermittelt. Dabei tauschen Netzknoten des ersten Teilnetzes zugeordnete Kommunikationsgeräte zur Bildung einer Baumtopologie untereinander Nachrichten mit Topologieinformationen aus. Im zweiten Teilnetz werden Nachrichten entsprechend einem Parallel- oder Ringredundanz-Protokoll übermittelt. Als Wurzel-Netzknoten des ersten Teilnetzes wird ein virtueller Netzknoten konfiguriert, der über jeweils eine virtuelle nicht durch einen Fehler unterbrechbare Verbindung mit sämtlichen Netzknoten des zweiten Teilnetzes verbunden ist.

EP 2 838 220 B1 betrifft ein Verfahren zur redundanten Nachrichtenübermittlung in einem Kommunikationsnetz, das eine beliebig vermaschte Netztopologie aufweist. Mehrere Kommunikationsgeräte umfassen jeweils eine erste und eine zweite Sende- und Empfangseinheit. Den Sende- und Empfangseinheiten ist jeweils eine Signalverarbeitungseinheit zugeordnet, durch die redundant vom Kommunikationsgerät zu sendende Nachrichten dupliziert von den Sende- und Empfangseinheiten gesendet und von den Sende- und Empfangseinheiten am Kommunikationsgerät redundant empfangene Nachrichten detektiert werden. Für eine zumindest abschnittsweise redundante Kommunikationsverbindung zwischen zwei Netzknoten werden innerhalb des Kommunikationsnetzes werden voneinander unabhängige Pfade ermittelt. Redundant zu übermittelnde Nachrichten werden entsprechend zu den ermittelten Pfaden korrespondierenden Weiterleitungsregeln im Kommunikationsnetz ausgetauscht.

Aus US 2008/253385 A1 ein Verfahren zur redundanten Datenübermittlung in einem Kommunikationsnetz bekannt, bei dem an Datagramme weiterleitenden Kommunikationsgeräten des Kommunikationsnetzes jeweils zumindest ein erstes und ein zweites virtuelles lokales Netz (VLAN) konfiguriert werden. Zumindest ausgewählte zu sendende Datagramme werden durch ein senderseitiges Kommunikationsgerät dupliziert und sowohl über das erste VLAN als auch über das zweite VLAN übermittelt. Den VLANs zugeordnete empfangene Datagramme werden durch empfängerseitige Kommunikationsgeräte jeweils auf Identität mit einem bereits empfangenen Datagramm geprüft und bei Vorliegen eines bereits empfangenen identischen Datagramms verworfen.

Insbesondere für industrielle Kommunikationssysteme sind zahlreiche Redundanzprotokolle entwickelt worden, durch die Leitungs- bzw. Komponentenausfälle oder -störungen kompensiert werden können. Dabei sind insbesondere stoßbehaftete Redundanzverfahren, wie etwa MRP (Media Redundancy Protocol) oder RSTP/MSTP (Rapid/Multiple Spanning Tree Protocol), bei denen während einer Rekonfiguration von Haupt-Pfaden auf Reserve-Pfade umgeschaltet wird, von stoßfreien Redundanzverfahren zu unterscheiden. Bei stoßfreien Redundanzverfahren, wie etwa HSR (High-availability Seamless Redundancy), PRP (Parallel Redundancy Protocol) oder MRPD (Media Redundancy for Planned Duplication), ist grundsätzlich keine Rekonfiguration des Kommunikationssystems erforderlich, so dass somit auch kurzzeitige Kommunikationsunterbrechungen vermieden werden können. Für eine Anwendung obiger Redundanzprotokolle ist häufig spezielle Hardware erforderlich, so dass kommerziell stark verbreitete Ethernet-Komponenten nicht ausreichend sind.

Der vorliegenden Erfindung liegt die Aufgabe zugrunde, ein Verfahren zur redundanten Datenübermittlung in einem Kommunikationsnetz anzugeben, das bei Verwendung von beliebiger, standardkonformer Ethernet-Hardware eine Realisierung eines stoßfreien Redundanzverfahrens für eine Vielzahl von Netztopologien ermöglicht, sowie eine geeignete Implementierung zur Durchführung des Verfahrens zu schaffen.

Diese Aufgabe wird erfindungsgemäß durch ein Verfahren mit den in Anspruch 1 angegebenen Merkmalen, durch eine Konfigurationsvorrichtung mit den in Anspruch 13 angegebenen Merkmalen sowie durch ein Kommunikationssystem mit den in Anspruch 14 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren zur redundanten Datenübermittlung in einem Kommunikationsnetz werden an Datagramme weiterleitenden Kommunikationsgeräten, wie Switches oder Bridges, des Kommunikationsnetzes jeweils zumindest ein erstes und ein zweites virtuelles lokales Netz (VLAN) konfiguriert, insbesondere Port-basiert bzw. Tag-basiert. Für das erste und das zweite VLAN werden jeweils unter Anwendung eines Spannbaum-Protokolls, wie STP, RSTP oder MSTP, innerhalb des Kommunikationsnetzes unterschiedliche Spannbäume ermittelt, durch die für das erste und des zweite VLAN jeweils aktive Pfade zur Weiterleitung von Datagrammen, insbesondere Frames, über die weiterleitenden Kommunikationsgeräte vorgegeben werden. Vorzugsweise werden die aktiven Pfade zur Weiterleitung von Datengrammen durch Blockierung von zu einer Schleifenbildung innerhalb des Kommunikationsnetzes führenden Ports der weiterleitenden Kommunikationsgeräte vorgegeben.

Erfindungsgemäß werden zumindest ausgewählte zu sendende Datagramme durch ein senderseitiges Kommunikationsgerät, wie eine speicherprogrammierbare Steuerung (SPS) oder ein Host mit einer installierten virtuellen SPS, dupliziert und sowohl über das erste VLAN als auch über das zweite VLAN übermittelt. Demgegenüber werden den VLANs zugeordnete empfangene Datagramme durch empfängerseitige Kommunikationsgeräte, wie dezentrale Peripheriemodule einer SPS oder Eingabe-/Ausgabe-Geräte bzw. IO-Module, jeweils auf Identität mit einem bereits empfangenen Datagramm geprüft und bei Vorliegen eines bereits empfangenen identischen Datagramms verworfen. Vorteilhafterweise sind die sender- bzw. empfängerseitigen Kommunikationsgeräte zum Senden und Empfangen zumindest der ausgewählten Datagramme über das erste und das zweite VLAN eingerichtet. Darüber hinaus können die sender- bzw. empfängerseitigen Kommunikationsgeräte das Vorliegen eines bereits empfangenen identischen Datagramms anhand einer jeweiligen senderseitig zugeordneten bzw. eingefügten Sequenznummer bzw. anhand eines identischen über das jeweilige empfangene Datagramm berechneten Hashwerts detektieren. Insbesondere kann die Sequenznummer senderseitig in einen Nutzdatenbereich des jeweiligen Datagramms eingefügt werden, was mit beliebiger Ethernet-Hardware möglich ist.

Mit der vorliegenden Erfindung kann also auf Basis von standardkonformer Ethernet-Hardware aufwandsarm für grundsätzlich beliebige Netztopologien ein performantes Redundanzverfahren ohne Rekonfigurationszeiten nach Störungen oder Ausfällen realisiert werden. Insbesondere ergeben sich bei PROFINET-basierten Automatisierungssystemen aufgrund einer Rückwirkungsfreiheit des erfindungsgemäßen Redundanzverfahrens auf den PROFINET-Standard keine Integrationsprobleme. Im Vergleich zum Redundanzverfahren gemäß IEEE802.1CB - "Frame Replication and Elimination for Reliability" (FRER) - sind mit der vorliegenden Erfindung keine zusätzlichen Ethernet-Header und Hardware-Funktionen erforderlich. Gegenüber HSR und PRP werden mit der vorliegenden Erfindung keine zusätzlichen Header oder Trailer benötigt.

Die vorliegende Erfindung kann besonders vorteilhaft bei Kombination von Ringtopologien mit Linientopologien oder Baumtopologien bzw. bei beliebig vermaschten Topologien angewendet werden. Beispielsweise können erste weiterleitende Kommunikationsgeräte in einer Ring-Topologie miteinander verbunden sein, während zweite weiterleitende Kommunikationsgeräte in einer Linien- oder Baum-Topologie miteinander verbunden sind. In diesem Fall sind zur Kopplung zumindest ausgewählte erste weiterleitende Kommunikationsgeräte vorgesehen, die jeweils mit zwei ersten Kommunikationsgeräten und mit einem zweiten Kommunikationsgerät verbunden sind.

Entsprechend einer bevorzugten Ausgestaltung der vorliegenden Erfindung werden zur schleifenfreien Übermittlung der Datagramme innerhalb des ersten und des zweiten VLAN entsprechend Multiple Spanning Tree Protocol (MSTP) Spannbäume erzeugt, über welche die Datagramme übermittelt werden. Dabei wird für das erste VLAN eine erste Multiple Spanning Tree-Instanz erzeugt, während für das zweite VLAN eine zweite Multiple Spanning Tree-Instanz erzeugt. Dementsprechend können die unterschiedlichen Spannbäume für das erste und das zweite VLAN einfach und zuverlässig durch die erzeugten Multiple Spanning Tree-Instanzen vorgegeben werden. Vorteilhafterweise wird einem Identifikator des ersten VLAN ein Identifikator der ersten Multiple Spanning Tree-Instanz zugeordnet, während einem Identifikator des zweiten VLAN ein Identifikator der zweiten Multiple Spanning Tree-Instanz zugeordnet wird. Darüber hinaus wird beispielsweise in jedem weiterleitenden Kommunikationsgerät für jedes VLAN eine separate Sender- bzw. Empfänger-Adress-Tabelle, insbesondere Forwarding Database oder MAC-Tabelle, bereitgestellt. Entsprechend einer besonders bevorzugten Weiterbildung der vorliegenden Erfindung werden die Spannbäume für das erste und das zweite VLAN als Traffic Engineering Multiple Spanning Tree-Instanzen konfiguriert, so dass unterschiedliche Spannbäume für die VLANs effizient bereitgestellt werden können und ein falsches Anlernen von Pfaden für die VLANs vermieden wird, das insbesondere bei einem Shared VLAN Learning auftreten würde.

Entsprechend einer weiteren Ausgestaltung der vorliegenden Erfindung können das erste und das zweite VLAN für eine Übermittlung von Echtzeit-Datenverkehr verwendet werden, während an den Datagramme weiterleitenden Kommunikationsgeräten für Nicht-Echtzeit-Datenverkehr jeweils ein drittes VLAN konfiguriert wird. Dementsprechend wird auch für das dritte VLAN unter Anwendung eines Spannbaum-Protokolls innerhalb des Kommunikationsnetzes ein separater Spannbaum ermittelt, durch den für das dritte VLAN ein aktiver Pfad zur Weiterleitung von Datagrammen vorgegeben wird. Somit können verfügbare System-Ressourcen effizient genutzt werden, indem eine stoßfreies Redundanzverfahren lediglich für Echtzeit-Datenverkehr vorgesehen ist und für Nicht-Echtzeit-Datenverkehr ein weniger aufwendiges stoßbehaftetes Redundanzverfahren angewendet wird.

Vorzugsweise wird der Spannbaum für das dritte VLAN aufwandsarm als Internal Spanning-Tree-Instanz konfiguriert. Eine Schleifenbildung innerhalb des dritten VLAN kann beispielsweise sowohl mittels Multiple Spanning Tree Protocol (MSTP) als auch mittels Media Redundancy Protocol (MRP) unterbunden werden. Vorteilhafterweise erfolgt eine Zuordnung von zu sendenden Datagrammen zu Echtzeit-Datenverkehr oder zu Nicht-Echtzeit-Datenverkehr jeweils durch eine auf dem jeweiligen senderseitigen Kommunikationsgerät installierte Steuerungsanwendung.

Das erfindungsgemäße Kommunikationssystem ist zur Durchführung eines Verfahrens entsprechend obigen Ausführungen vorgesehen und umfasst mehrere Datagramme weiterleitende Kommunikationsgeräte, an denen jeweils ein erstes und ein zweites virtuelles lokales Netz, VLAN, konfiguriert ist, ein senderseitiges Kommunikationsgerät und ein empfängerseitiges Kommunikationsgerät. Das senderseitige Kommunikationsgerät ist dazu eingerichtet, zumindest ausgewählte zu sendende Datagramme zu duplizieren und sowohl über das erste VLAN als auch über das zweite VLAN zu übermitteln Demgegenüber ist das empfängerseitige Kommunikationsgerät dazu eingerichtet, den VLANs zugeordnete empfangene Datagramme jeweils auf Identität mit einem bereits empfangenen Datagramm zu prüfen und bei Vorliegen eines bereits empfangenen identischen Datagramms zu verwerfen. Darüber hinaus sind die Datagramme weiterleitenden Kommunikationsgeräte jeweils dafür eingerichtet, für das erste und das zweite VLAN jeweils unter Anwendung eines Spannbaum-Protokolls unterschiedliche Spannbäume zu ermitteln, durch die für das erste und des zweite VLAN jeweils aktive Pfade zur Weiterleitung von Datagrammen über die weiterleitenden Kommunikationsgeräte vorgegeben sind.

Die erfindungsgemäße Konfigurationsvorrichtung ist zur Durchführung eines Verfahrens entsprechend obigen Ausführungen geeignet und dafür eingerichtet, an Datagramme weiterleitenden Kommunikationsgeräten jeweils zumindest ein erstes und ein zweites virtuelles lokales Netz, VLAN, zu konfigurieren. Außerdem ist die Konfigurationsvorrichtung dafür eingerichtet, die weiterleitenden Kommunikationsgeräte zu konfigurieren, für das erste und das zweite VLAN jeweils unter Anwendung eines Spannbaum-Protokolls unterschiedliche Spannbäume zu ermitteln, durch die für das erste und des zweite VLAN jeweils aktive Pfade zur Weiterleitung von Datagrammen über die weiterleitenden Kommunikationsgeräte vorgegeben werden. Darüber hinaus ist die Konfigurationsvorrichtung dafür eingerichtet, zumindest ein Kommunikationsgerät zu konfigurieren, zumindest ausgewählte zu sendende Datagramme zu duplizieren und sowohl über das erste VLAN als auch über das zweite VLAN zu übermitteln, und zumindest ein Kommunikationsgerät zu konfigurieren, den VLANs zugeordnete empfangene Datagramme jeweils auf Identität mit einem bereits empfangenen Datagramm zu prüfen und bei Vorliegen eines bereits empfangenen identischen Datagramms zu verwerfen.

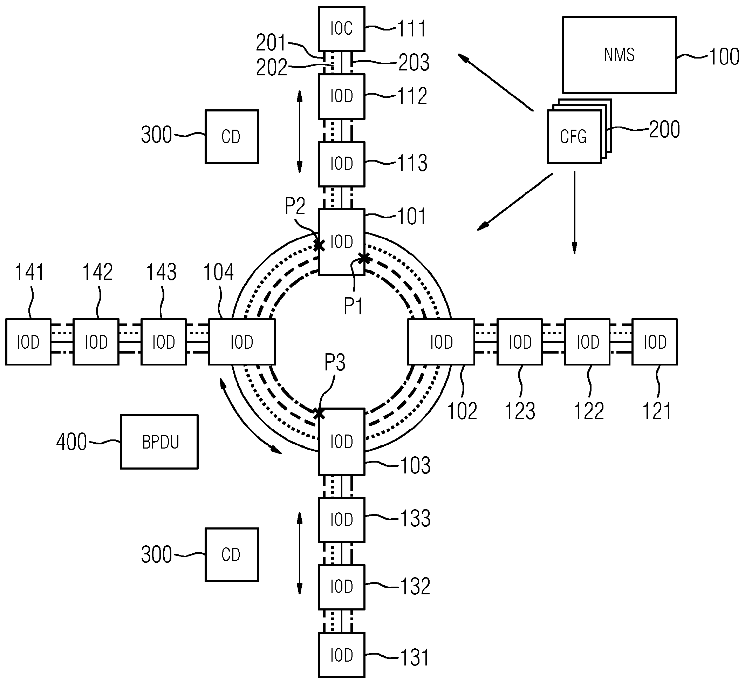

Die vorliegende Erfindung wird nachfolgend an einem Ausführungsbeispiel anhand der Figur näher erläutert. Es zeigt die
- Figur: ein Kommunikationssystem zur redundanten Datenübermittlung, bei dem Kommunikationsgeräte in einer Ringtopologie bzw. in einer Linientopologie miteinander verbunden sind,

Das in der Figur dargestellte Kommunikationssystem umfasst beispielhaft erste Kommunikationsgeräte 101-104, die in einer Ring-Topologie miteinander verbunden sind, und zweite Kommunikationsgeräte 111-113, 121-123, 131-133, 141-144, die in einer Linientopologie miteinander verbunden sind. Dabei sind alle ersten Kommunikationsgeräte 101-104 jeweils mit zwei ersten Kommunikationsgeräten und mit einem zweiten Kommunikationsgerät verbunden. Grundsätzlich ist das nachfolgend beschriebene Redundanzverfahren in beliebig vermaschten Topologien anwendbar. Im vorliegenden Ausführungsbeispiel haben sämtliche Kommunikationsgeräte 101-104, 111-113, 121-123, 131-133, 141-144 jeweils sowohl eine Weiterleitungsfunktion wie ein Switch oder eine Bridge als auch eine Funktion einer Teilnehmerstation, beispielsweise als IO-Controller bzw. speicherprogrammierbare Steuerung, wie das Kommunikationsgerät 111, oder als IO-Gerät, Eingabe-/Ausgabe-Gerät bzw. dezentrales Peripheriegerät, wie die Kommunikationsgeräte 101-104, 112-113, 121-123, 131-133, 141-144. Zusätzlich ist ein Netzwerk-Controller 100 als Konfigurationsvorrichtung vorgesehen, die nachstehende beschriebene Konfigurationsdaten 200 an die Kommunikationsgeräte 101-104, 111-113, 121-123, 131-133, 141-144 verteilt.

Zur stoßfreien redundanten Übermittlung von Echtzeit-Datenverkehr werden im vorliegenden Ausführungsbeispiel an den Kommunikationsgeräten 101-104, 111-113, 121-123, 131-133, 141-144 jeweils zumindest ein erstes 201 und ein zweites VLAN 202 konfiguriert. Darüber hinaus wird n den Kommunikationsgeräten 101-104, 111-113, 121-123, 131-133, 141-144 zur stoßbehafteten redundanten Übermittlung von Nicht-Echtzeit-Datenverkehr jeweils ein drittes VLAN 203 konfiguriert. In der Figur sind den VLANs 201-203 logisch zugeordnete Pfade graphisch unterschiedlich markiert dargestellt (VLAN 201 strichliert, VLAN 202 punktiert, VLAN 203 strich-punktiert). Im vorliegenden Ausführungsbeispiel sind sämtliche Kommunikationsgeräte 101-104, 111-113, 121-123, 131-133, 141-144 zum Senden und Empfangen von Datagrammen 300 mit Steuerungsdaten über das erste 201, das zweite 202 und das dritte VLAN 203 eingerichtet.

Für das erste 201 und das zweite VLAN 202 werden jeweils unter Anwendung eines Spannbaum-Protokolls, insbesondere MSTP, unterschiedliche Spannbäume ermittelt, durch die für das erste 201 und des zweite VLAN 202 jeweils aktive Pfade zur Weiterleitung von Datagrammen 300, insbesondere Frames, mit Steuerungsdaten über die Kommunikationsgeräte 101-104, 111-113, 121-123, 131-133, 141-144 vorgegeben werden. Vorteilhafterweise werden Switches oder Bridges dabei so konfiguriert werden, dass mittels MSTP für beide VLANs bzw. Multiple Spanning Tree-Instanzen (maximal) unterschiedliche Spannbäume erzeugt werden. Die aktiven Pfade zur Weiterleitung der Datengramme 300 werden insbesondere durch Blockierung von zu einer Schleifenbildung innerhalb des Kommunikationssystems führenden Ports der weiterleitenden Kommunikationsgeräte vorgegeben. Im vorliegenden Ausführungsbeispiel sind dies der Port P1 am Kommunikationsgerät 101 für das erste VLAN 201 und der Port P2 ebenfalls am Kommunikationsgerät 101 für das zweite VLAN 202. Auch für das dritte VLAN 203 wird unter Anwendung eines Spannbaum-Protokolls innerhalb ein separater Spannbaum ermittelt, durch den für das dritte VLAN 203 ein aktiver Pfad zur Weiterleitung von Datagrammen vorgegeben wird. Beispielsweise wird zur Vermeidung einer Schleifenbildung für das dritte VLAN 203 der Port P3 am Kommunikationsgerät 103 zur Weiterleitung der Datengramme 300 blockiert. Innerhalb des dritten VLAN 203 kann eine Schleifenbildung beispielsweise alternativ zu Rapid oder Multiple Spanning Tree Protocol (RSTP/MSTP) grundsätzlich auch mittels Media Redundancy Protocol, (MRP) unterbunden werden. Neben einer direkten Anwendung von MSTP in einem realen Kommunikationsnetz ist zu obiger Spannbaum-Ermittlung auch eine Anwendung eines analogen Verfahrens im Netzwerk-Controller 100 für einen digitalen Zwilling des Kommunikationsnetzes möglich.

Zur Ermittlung der Spannbäume für die VLANs 201-203 werden im vorliegenden Ausführungsbeispiel jeweils ausgehend von einem als Root-Bridge betriebenen Kommunikationsgerät Nachrichten 400 mit Topologie-Informationen weitergeleitet, die insbesondere Pfadkosten für eine Nutzdatenübermittlung zur Root-Bridge umfassen. Insbesondere umfassen die Topologie-Informationen Angaben zu bestehenden Links zwischen den Kommunikationsgeräten 101-104, 111-113, 121-123, 131-133, 141-144. Die Nachrichten 400 mit den Topologie-Informationen sind insbesondere Bridge Protocol Data Units (BPDUs). Anhand der Nachrichten 400 mit den Topologie-Informationen wählen die Kommunikationsgeräte 101-104, 111-113, 121-123, 131-133, 141-144 untereinander das als Root-Bridge betriebene Kommunikationsgerät aus. Dies erfolgt beispielsweise anhand von Knotenidentifikatoren und Prioritäten, die den Kommunikationsgeräten 101-104, 111-113, 121-123, 131-133, 141-144 jeweils zugeordnet sind.

Anhand der Nachrichten mit den Topologie-Informationen bzw. BPDUs 400 konfigurieren die Kommunikationsgeräte 101-104, 111-113, 121-123, 131-133, 141-144 ihre jeweiligen Ports für eine schleifenfreie Nutzdatenübermittlung. Dabei werden von der jeweiligen Root-Bridge ausgehende schleifenfreie Verbindungen zu den übrigen Kommunikationsgeräten 101-104, 111-113, 121-123, 131-133, 141-144 anhand einer Ermittlung minimaler Pfadkosten zur Root-Bridge aufgebaut. Pro VLAN 201-203 können die Pfadkosten durchaus unterschiedlich sein. Insbesondere konfigurieren die Kommunikationsgeräte 101-104, 111-113, 121-123, 131-133, 141-144 ihre jeweiligen Ports anhand der BPDUs 400 für ein Blockieren einer Weiterleitung von Nutzdaten bzw. Topologie-Informationen, für die Weiterleitung von Nutzdaten bzw. Topologie-Informationen, für ein Lernen von MAC-Adressen und für ein Erstellen von Weiterleitungsregeln. Durch Konfiguration der Ports der Kommunikationsgeräte 101-104, 111-113, 121-123, 131-133, 141-144 werden Links zwischen Kommunikationsgeräten bzw. Netzknoten aktiviert oder deaktiviert.

Die Datagramme 300 mit den Steuerungsdaten werden innerhalb der VLANs 201-203 vorzugsweise jeweils entsprechend Multiple Spanning Tree Protocol (MSTP) zwischen den Kommunikationsgeräten 101-104, 111-113, 121-123, 131-133, 141-144 übermittelt. Für das erste VLAN 201 wird dementsprechend eine erste Multiple Spanning Tree-Instanz erzeugt. In analoger Weise wird für das zweite VLAN eine zweite Multiple Spanning Tree-Instanz erzeugt, so dass die unterschiedlichen Spannbäume für das erste 201 und das zweite VLAN 202 durch die erzeugten Multiple Spanning Tree-Instanzen vorgegeben werden. Die Spannbäume für das erste 201 und das zweite VLAN 202 werden vorteilhafterweise als Traffic Engineering Multiple Spanning Tree-Instanzen konfiguriert, während der Spannbaum für das dritte VLAN 203 als Internal Spanning-Tree-Instanz konfiguriert wird. Weitergehende Details zur Funktionsweise des Multiple Spanning Tree Protocol können beispielsweise Wikipedia entnommen werden (siehe https://en.wikipedia.org/wiki/Multiple_Spanning_Tree_Protocol). Im Übrigen ist das Multiple Spanning Tree Protocol in IEEE802.1Q-2022 spezifiziert.

Grundsätzlich werden Traffic Engineering Multiple Spanning Tree-Instanzen ohne Protokoll zur Verhinderung einer Schleifenbildung betrieben. Deswegen werden in diesem Fall an Switches oder Bridges jeweils über eine Engineering Schnittstelle neben der jeweiligen Multiple Spanning Tree-Instanz eine separate Forwarding Database (FDB) pro VLAN eingerichtet. Da bei Nutzung von Traffic Engineering Multiple Spanning Tree-Instanzen kein FDB-Anlernen erfolgt, können beliebig viele Multiple Spanning Tree-Instanzen erzeugt werden. Prinzipiell können Switches oder Bridges pro Multiple Spanning Tree-Instanz so konfiguriert werden, dass a) kein FDB-Anlernen erfolgt, b) ein FDB-Anlernen gemeinsam für dieselbe Multiple Spanning Tree-Instanz erfolgt (Shared VLAN Learning) oder c) ein FDB-Anlernen individuell erfolgt.

Im vorliegenden Ausführungsbeispiel wird einem Identifikator des ersten VLAN 201 ein Identifikator der ersten Multiple Spanning Tree-Instanz zugeordnet wird. In entsprechender Weise wird einem Identifikator des zweiten VLAN 202 ein Identifikator der zweiten Multiple Spanning Tree-Instanz zugeordnet. Dies gilt für das dritte VLAN 203 analog. Auf dieser Grundlage wird in jedem weiterleitenden Kommunikationsgerät 101-104, 111-113, 121-123, 131-133, 141-144 für jedes VLAN 201-203 eine separate Sender- bzw. Empfänger-Adress-Tabelle, insbesondere Forwarding Database oder MAC-Tabelle, bereitgestellt.

Zu sendende Datagramme 300 mit Steuerungsdaten, die als Echtzeit-Datenverkehr klassifiziert worden sind, werden jeweils durch ein senderseitiges Kommunikationsgerät 101-104, 111-113, 121-123, 131-133, 141-144 dupliziert und sowohl über das erste VLAN 201 als auch über das zweite VLAN 202 übermittelt. Eine Klassifikation der Datagramme 300 nach Echtzeit-Datenverkehr und Nicht-Echtzeit-Datenverkehr kann beispielsweise durch ein auf dem jeweiligen Kommunikationsgerät 101-104, 111-113, 121-123, 131-133, 141-144 ablaufendes Steuerungsprogramm vorgenommen werden. Insbesondere kann auch ein Duplizieren der zu sendenden Datagramme mittels dieses Steuerungsprogramms erfolgen.

Dem ersten 201 bzw. dem zweiten VLAN 202 zugeordnete empfangene Datagramme 300 werden empfängerseitig im jeweiligen Kommunikationsgerät 101-104, 111-113, 121-123, 131-133, 141-144 jeweils auf Identität mit einem bereits empfangenen Datagramm 300 geprüft. Bei Vorliegen eines bereits empfangenen identischen Datagramms 300 wird ein später empfangenes Duplikat jeweils verworfen, beispielsweise durch das Steuerungsprogramm, das zu sendende Datagramme 300 ansonsten klassifiziert und ggf. dupliziert.

Die sender- bzw. empfängerseitigen Kommunikationsgeräte 101-104, 111-113, 121-123, 131-133, 141-144 können das Vorliegen eines bereits empfangenen identischen Datagramms 300 insbesondere anhand einer jeweiligen senderseitig zugeordneten bzw. eingefügten Sequenznummer bzw. anhand eines identischen über das jeweilige empfangene Datagramm 300 berechneten Hashwerts detektieren. Im Fall einer Verwendung einer Sequenznummer kann diese senderseitig in einen Nutzdatenbereich des jeweiligen Datagramms 300 eingefügt werden, beispielsweise durch oben genanntes Steuerungsprogramm.

Der Netzwerk-Controller 100 unterstützt eine Durchführung des vorangehenden beschriebenen Redundanzverfahrens und ist dafür eingerichtet, an den Kommunikationsgeräten 101-104, 111-113, 121-123, 131-133, 141-144 jeweils zumindest die VLANs 201-203 zu konfigurieren. Außerdem ist der Netzwerk-Controller 100 dafür eingerichtet, die Kommunikationsgeräte 101-104, 111-113, 121-123, 131-133, 141-144 zu konfigurieren, für das erste 201 und das zweite VLAN 202 jeweils unter Anwendung eines Spannbaum-Protokolls unterschiedliche Spannbäume zu ermitteln, durch die für das erste 201 und des zweite VLAN 202 jeweils aktive Pfade zur Weiterleitung der Datagramme 300 über die Kommunikationsgeräte 101-104, 111-113, 121-123, 131-133, 141-144 vorgegeben werden. Darüber hinaus ist der Netzwerk-Controller dafür eingerichtet, die Kommunikationsgeräte 101-104, 111-113, 121-123, 131-133, 141-144 zu konfigurieren, zu sendende Datagramme 300 mit Steuerungsdaten zu duplizieren und sowohl über das erste VLAN 201 als auch über das zweite VLAN 202 zu übermitteln. Schließlich ist der Netzwerk-Controller dafür vorgesehen, die Kommunikationsgeräte 101-104, 111-113, 121-123, 131-133, 141-144 zu konfigurieren, den VLANs 201, 202 zugeordnete empfangene Datagramme 300 jeweils auf Identität mit einem bereits empfangenen Datagramm 300 zu prüfen und bei Vorliegen eines bereits empfangenen identischen Datagramms 300 zu verwerfen.

## Patentansprüche

1. Verfahren zur redundanten Datenübermittlung in einem Kommunikationsnetz, bei dem
- an Datagramme (300) weiterleitenden Kommunikationsgeräten (101-104, 112-113, 122-123, 132-133, 142-144) des Kommunikationsnetzes jeweils zumindest ein erstes (201) und ein zweites virtuelles lokales Netz (202), VLAN, konfiguriert werden,
- für das erste (201) und das zweite VLAN (202) jeweils unter Anwendung eines Spannbaum-Protokolls innerhalb des Kommunikationsnetzes unterschiedliche Spannbäume ermittelt werden, durch die für das erste und des zweite VLAN jeweils aktive Pfade zur Weiterleitung von Datagrammen über die weiterleitenden Kommunikationsgeräte vorgegeben werden,
- zumindest ausgewählte zu sendende Datagramme (300) durch ein senderseitiges Kommunikationsgerät (111) dupliziert und sowohl über das erste VLAN (201) als auch über das zweite VLAN (202) übermittelt werden,
- den VLANs (201, 202) zugeordnete empfangene Datagramme (300) durch empfängerseitige Kommunikationsgeräte (121, 131, 141) jeweils auf Identität mit einem bereits empfangenen Datagramm geprüft und bei Vorliegen eines bereits empfangenen identischen Datagramms verworfen werden.

2. Verfahren nach Anspruch 1,
bei dem zur schleifenfreien Übermittlung der Datagramme innerhalb des ersten (201) und des zweiten VLAN (202) entsprechend Multiple Spanning Tree Protocol, MSTP, Spannbäume erzeugt werden, über welche die Datagramme übermittelt werden, bei dem für das erste VLAN eine erste Multiple Spanning Tree-Instanz erzeugt wird, bei dem für das zweite VLAN eine zweite Multiple Spanning Tree-Instanz erzeugt wird und bei dem die unterschiedlichen Spannbäume für das erste und das zweite VLAN durch die erzeugten Multiple Spanning Tree-Instanzen vorgegeben werden.

3. Verfahren nach Anspruch 2,
bei dem einem Identifikator des ersten VLAN (201) ein Identifikator der ersten Multiple Spanning Tree-Instanz zugeordnet wird, bei dem einem Identifikator des zweiten VLAN (202) ein Identifikator der zweiten Multiple Spanning Tree-Instanz zugeordnet wird, und bei dem in jedem weiterleitenden Kommunikationsgerät (101-104, 112-113, 122-123, 132-133, 142-144) für jedes VLAN eine separate Sender- und/oder Empfänger-Adress-Tabelle, insbesondere Forwarding Database oder MAC-Tabelle, bereitgestellt wird.

4. Verfahren nach einem der Ansprüche 2 oder 3,
bei dem die Spannbäume für das erste und das zweite VLAN als Traffic Engineering Multiple Spanning Tree-Instanzen konfiguriert werden.

5. Verfahren nach einem der Ansprüche 1 bis 4,
bei dem die sender- und/oder empfängerseitigen Kommunikationsgeräte zum Senden und Empfangen zumindest der ausgewählten Datagramme über das erste und das zweite VLAN eingerichtet sind.

6. Verfahren nach einem der Ansprüche 1 bis 5,
bei dem die sender- und/oder empfängerseitigen Kommunikationsgeräte das Vorliegen eines bereits empfangenen identischen Datagramms anhand einer jeweiligen senderseitig zugeordneten und/oder eingefügten Sequenznummer und/oder anhand eines identischen über das jeweilige empfangene Datagramm berechneten Hashwerts detektieren.

7. Verfahren nach Anspruch 6,
bei dem die Sequenznummer senderseitig in einen Nutzdatenbereich des jeweiligen Datagramms eingefügt wird.

8. Verfahren nach einem der Ansprüche 1 bis 7,
bei dem die aktiven Pfade zur Weiterleitung von Datengrammen durch Blockierung von zu einer Schleifenbildung innerhalb des Kommunikationsnetzes führenden Ports der weiterleitenden Kommunikationsgeräte vorgegeben werden.

9. Verfahren nach einem der Ansprüche 1 bis 8,
bei dem das erste (201) und das zweite VLAN (202) für eine Übermittlung von Echtzeit-Datenverkehr verwendet werden, bei dem an den Datagramme (300) weiterleitenden Kommunikationsgeräten (101-104, 112-113, 122-123, 132-133, 142-144) für Nicht-Echtzeit-Datenverkehr jeweils ein drittes VLAN (203) konfiguriert wird und bei dem für das dritte VLAN unter Anwendung eines Spannbaum-Protokolls innerhalb des Kommunikationsnetzes ein separater Spannbaum ermittelt wird, durch den für das dritte VLAN ein aktiver Pfad zur Weiterleitung von Datagrammen vorgegeben wird.

10. Verfahren nach Anspruch 9,
bei dem der Spannbaum für das dritte VLAN als Internal Spanning-Tree-Instanz konfiguriert wird.

11. Verfahren nach einem der Ansprüche 9 oder 10,
bei dem eine Schleifenbildung innerhalb des dritten VLAN mittels Multiple Spanning Tree Protocol, MSTP, oder mittels Media Redundancy Protocol, MRP, unterbunden wird.

12. Verfahren nach einem der Ansprüche 9 bis 11,
bei dem erste weiterleitende Kommunikationsgeräte in einer Ring-Topologie miteinander verbunden sind, bei dem zweite weiterleitende Kommunikationsgeräte in einer Linien- oder Baum-Topologie miteinander verbunden sind und bei dem zumindest ausgewählte erste weiterleitende Kommunikationsgeräte jeweils mit zwei ersten Kommunikationsgeräten und mit einem zweiten Kommunikationsgerät verbunden sind.

13. Konfigurationsvorrichtung (100) zur Durchführung eines Verfahrens nach einem der Ansprüche 1 bis 12, wobei die Konfigurationsvorrichtung dafür eingerichtet ist,
- an Datagramme (300) weiterleitenden Kommunikationsgeräten (101-104, 112-113, 122-123, 132-133, 142-144) jeweils zumindest ein erstes (201) und ein zweites virtuelles lokales Netz (202), VLAN, zu konfigurieren,
- die weiterleitenden Kommunikationsgeräte zu konfigurieren, für das erste und das zweite VLAN jeweils unter Anwendung eines Spannbaum-Protokolls unterschiedliche Spannbäume zu ermitteln, durch die für das erste und des zweite VLAN jeweils aktive Pfade zur Weiterleitung von Datagrammen über die weiterleitenden Kommunikationsgeräte vorgegeben werden,
- zumindest ein Kommunikationsgerät (111) zu konfigurieren, zumindest ausgewählte zu sendende Datagramme zu duplizieren und sowohl über das erste VLAN als auch über das zweite VLAN zu übermitteln,
- zumindest ein Kommunikationsgerät (121, 131, 141) zu konfigurieren, den VLANs zugeordnete empfangene Datagramme jeweils auf Identität mit einem bereits empfangenen Datagramm zu prüfen und bei Vorliegen eines bereits empfangenen identischen Datagramms zu verwerfen.

14. Kommunikationssystem zur Durchführung eines Verfahrens nach einem der Ansprüche 1 bis 12, wobei das Kommunikationssystem zumindest
- eine Konfigurationsvorrichtung nach Anspruch 13,
- mehrere Datagramme (300) weiterleitende Kommunikationsgeräte (101-104, 112-113, 122-123, 132-133, 142-144), an denen jeweils ein erstes (201) und ein zweites virtuelles lokales Netz (202), VLAN, konfiguriert ist,
- ein senderseitiges Kommunikationsgerät (111), das dazu eingerichtet ist, zumindest ausgewählte zu sendende Datagramme zu duplizieren und sowohl über das erste VLAN als auch über das zweite VLAN zu übermitteln, und
- ein empfängerseitiges Kommunikationsgerät (121, 131, 141) umfasst, das dazu eingerichtet ist, den VLANs zugeordnete empfangene Datagramme jeweils auf Identität mit einem bereits empfangenen Datagramm zu prüfen und bei Vorliegen eines bereits empfangenen identischen Datagramms zu verwerfen,
- wobei die Datagramme weiterleitenden Kommunikationsgeräte jeweils ferner dafür eingerichtet sind, für das erste und das zweite VLAN jeweils unter Anwendung eines Spannbaum-Protokolls unterschiedliche Spannbäume zu ermitteln, durch die für das erste und des zweite VLAN jeweils aktive Pfade zur Weiterleitung von Datagrammen über die weiterleitenden Kommunikationsgeräte vorgegeben sind.

## Claims

1. Method for redundant data transmission in a communication network, in which
- at least a first (201) and a second virtual local network (202), VLAN, are configured in each case at communication devices (101-104, 112-113, 122-123, 132-133, 142-144), which forward datagrams (300), of the communication network,
- for the first (201) and the second VLAN (202), with the application of a spanning tree protocol in each case, different spanning trees are ascertained within the communication network, by way of which spanning trees active paths are predefined for the first and the second VLAN in each case for the forwarding of datagrams via the forwarding communication devices,
- at least selected datagrams (300) to be sent are duplicated by a sender-side communication device (111) and are transmitted both via the first VLAN (201) and also via the second VLAN (202),
- received datagrams (300) assigned to the VLANs (201, 202) are checked by receiver-side communication devices (121, 131, 141) for identity with a datagram already received in each case, and are discarded if there is an identical datagram which has already been received.

2. Method according to claim 1,
in which, for loop-free transmission of the datagrams within the first (201) and the second VLAN (202) according to the multiple spanning tree protocol, MSTP, spanning trees are generated, via which the datagrams are transmitted, in which a first multiple spanning tree instance is generated for the first VLAN, in which a second multiple spanning tree instance is generated for the second VLAN and in which the different spanning trees are predefined by the generated multiple spanning tree instances for the first and the second VLAN.

3. Method according to claim 2,
in which an identifier of the first VLAN (201) is assigned an identifier of the first multiple spanning tree instance, in which an identifier of the second VLAN (202) is assigned an identifier of the second multiple spanning tree instance, and in which a separate sender and/or receiver address table, in particular forwarding database or MAC table, is provided in each forwarding communication device (101-104, 112-113, 122-123, 132-133, 142-144) for each VLAN.

4. Method according to one of claims 2 or 3,
in which the spanning trees for the first and the second VLAN are configured as traffic engineering multiple spanning tree instances.

5. Method according to one of claims 1 to 4,
in which the sender-side and/or receiver-side communication devices are set up to send and receive at least the selected datagrams via the first and the second VLAN.

6. Method according to one of claims 1 to 5,
in which the sender-side and/or receiver-side communication devices detect the presence of an identical datagram which has already been received on the basis of a respective sequence number that is assigned on the sender side and/or is inserted, and/or on the basis of an identical hash value that is calculated via the respective received datagram.

7. Method according to claim 6,
in which the sequence number is inserted on the sender side into a useful data region of the respective datagram.

8. Method according to one of claims 1 to 7,
in which the active paths for forwarding datagrams are predefined by blocking ports, which lead to the formation of a loop within the communication network, of the forwarding communication devices.

9. Method according to one of claims 1 to 8,
in which the first (201) and the second VLAN (202) are used for transmission of real-time data traffic, in which a third VLAN (203) is configured in each case at communication devices (101-104, 112-113, 122-123, 132-133, 142-144), which forward datagrams (300), for non-real-time data traffic and in which for the third VLAN, with the application of a spanning tree protocol, a separate spanning tree is ascertained within the communication network, by way of which spanning tree an active path is predefined for the third VLAN for the forwarding of datagrams.

10. Method according to claim 9,
in which the spanning tree for the third VLAN is configured as an internal spanning tree instance.

11. Method according to one of claims 9 or 10,
in which a formation of a loop within the third VLAN is suppressed by means of the multiple spanning tree protocol, MSTP, or by means of the media redundancy protocol, MRP.

12. Method according to one of claims 9 to 11,
in which first forwarding communication devices are interconnected in a ring topology, in which second forwarding communication devices are interconnected in a line or tree topology and in which at least selected first forwarding communication devices are connected to two first communication devices and to one second communication device in each case.

13. Configuration apparatus (100) for performing a method according to one of claims 1 to 12, wherein the configuration apparatus is set up
- to configure at least a first (201) and a second virtual local network (202), VLAN, in each case at communication devices (101-104, 112-113, 122-123, 132-133, 142-144), which forward datagrams (300),
- to configure the forwarding communication devices, for the first and the second VLAN, with the application of a spanning tree protocol in each case, to ascertain different spanning trees, by way of which active paths are predefined for the first and the second VLAN in each case for the forwarding of datagrams via the forwarding communication devices,
- to configure at least one communication device (111) to duplicate at least selected datagrams to be sent and to transmit them both via the first VLAN and also via the second VLAN,
- to configure at least one communication device (121, 131, 141) to check received datagrams assigned to the VLANs for identity with a datagram already received in each case and to discard them if there is an identical datagram which has already been received.

14. Communication system for performing a method according to one of claims 1 to 12, wherein the communication system comprises at least
- a configuration apparatus according to claim 13,
- multiple communication devices (101-103, 112-113, 122-123, 132-133, 142-144), which forward datagrams (300), at which a first (201) and a second virtual local network (202), VLAN, are configured in each case,
- a sender-side communication device (111), which is set up to duplicate at least selected datagrams to be sent and to transmit them both via the first VLAN and also via the second VLAN, and
- a receiver-side communication device (121, 131, 141), which is set up to check received datagrams assigned to the VLANs for identity with a datagram already received in each case, and to discard them if there is an identical datagram which has already been received,
- wherein the communication devices forwarding datagrams are further set up in each case, for the first and the second VLAN, with the application of a spanning tree protocol in each case, to ascertain different spanning trees, by way of which active paths are predefined for the first and the second VLAN in each case for the forwarding of datagrams via the forwarding communication devices.

## Revendications

1. Procédé de transmission redondante de données dans un réseau de communication, dans lequel
- on configure respectivement au moins un premier (201) et un deuxième réseau (202) local virtuel, VLAN, sur des appareils (101-104, 112-113, 122-123, 132-133, 142-144) de communication acheminant des datagrammes (300),
- pour le premier (201) et le deuxième VLAN (202), on détermine respectivement, en utilisant un protocole d'arbre couvrant dans le réseau de communication, des arbres couvrants différents, par lesquels on prescrit, pour le premier et le deuxième VLAN, respectivement des chemins actifs pour l'acheminement de datagrammes en passant par les appareils de communication acheminant,
- on duplique, par un appareil (111) de communication du côté émetteur, des datagrammes (300) au moins sélectionnés à envoyer et les transmet tant par le premier VLAN (201) qu'également par le deuxième VLAN (202),
- on contrôle, par des appareils (121, 131, 141) de communication du côté récepteur, respectivement que des datagrammes (300) reçus affectés aux VLAN (201, 202) sont identiques à un datagramme déjà reçu et on les rejette en présence d'un datagramme identique déjà reçu.

2. Procédé suivant la revendication 1,
dans lequel, pour la transmission sans boucle des datagrammes à l'intérieur du premier (201) et du deuxième VLAN (202), on produit conformément au protocole multiple spanning tree, MSTP, des arbres couvrants, par lesquels on transmet les datagrammes, dans lequel, pour le premier VLAN, on produit une première instance multiple spanning tree, dans lequel, pour le deuxième VLAN, on produit une deuxième instance multiple spanning tree et dans lequel on prescrit des arbres couvrants différents pour le premier et le deuxième VLAN par les instances multiple spanning tree produites.

3. Procédé suivant la revendication 2,
dans lequel on affecte à un identifiant au premier VLAN (201) un identifiant de la première instance multiple spanning tree, dans lequel on affecte à un identifiant du deuxième VLAN (202) un identifiant de la deuxième instance multiple spanning tree, et dans lequel, dans chaque appareil (101-104, 112-113, 122-123, 132-133, 142-144) de communication acheminant, on dispose, pour chaque VLAN, d'une table d'adresse distinctes d'émetteur et/ou de récepteur, en particulier d'une table forwarding ou d'une table MAC.

4. Procédé suivant l'une des revendications 2 ou 3,
dans lequel on configure les arbres couvrants pour le premier et le deuxième VLAN sous la forme d'instance de traffic engineering multiple spanning tree.

5. Procédé suivant l'une des revendications 1 à 4,
dans lequel les appareils de communication du côté émetteur et/ou du côté récepteur sont agencés pour envoyer et recevoir au moins les datagrammes sélectionnés par le premier et le deuxième VLAN.

6. Procédé suivant l'une des revendications 1 à 5,
dans lequel les appareils de communication du côté émetteur et/ou récepteur détectent la présence d'un datagramme identique déjà reçu à l'aide d'un numéro de séquence respectif affecté et/ou ajoutés du côté émetteur et/ou à l'aide d'une valeur de hash identique calculée par le datagramme reçu respectivement.

7. Procédé suivant la revendication 6,
dans lequel on ajoute le numéro de séquence du côté émetteur dans une partie de données utiles du datagramme respectif.

8. Procédé suivant l'une des revendications 1 à 7,
dans lequel on prescrit des chemins actifs pour l'acheminement de datagrammes par blocage d'accès, menant à une formation de boucle dans le réseau de communication, des appareils de communication acheminant.

9. Procédé suivant l'une des revendications 1 à 8,
dans lequel on utilise le premier (201) et le deuxième VLAN (202) pour une transmission de trafic de données en temps réel, dans lequel on configure respectivement un troisième VLAN (203) pour un trafic de données, qui n'est pas en temps réel, sur les appareils (101-104, 112-113, 122-123, 132-133, 142-144) de communication acheminant des datagrammes (300) et dans lequel on détermine, pour le troisième VLAN, en appliquant un protocole d'arbre couvrant à l'intérieur du réseau de communication, un arbre couvrant distinct, par lequel on prescrit, pour le troisième VLAN, un chemin actif pour l'acheminement de datagrammes.

10. Procédé suivant la revendication 9,
dans lequel on configure l'arbre couvrant pour le troisième VLAN comme instance internal spanning tree.

11. Procédé suivant l'une des revendications 9 ou 10,
dans lequel on supprime une formation de boucle à l'intérieur du troisième VLAN au moyen du protocole multiple spanning tree, MSTP, ou au moyen du protocole media redundancy, MRP.

12. Protocole suivant l'une des revendications 9 à 11,
dans lequel on relie des premiers appareils de communication acheminant entre eux dans une topologie annulaire, dans lequel on relie des deuxièmes appareils de communication acheminant entre eux dans une topologie linéaire ou arborescente et dans lequel au moins des premiers appareils de communication acheminant sélectionnés sont reliés respectivement à deux premiers appareils de communication et à un deuxième appareil de communication.

13. Installation (100) de configuration pour effectuer un procédé suivant l'une des revendications 1 à 12, dans lequel l'installation de configuration est agencée pour
- configurer respectivement au moins un premier (201) et un deuxième réseau (202) local virtuel, VLAN, sur des appareils (101-104, 112-113, 122-123, 132-133, 142-144) de communication acheminant des datagrammes (300),
- configurer les appareils de communication acheminant, déterminer, pour le premier et le deuxième VLAN, en appliquant respectivement un protocole d'arbre couvrant, des arbres couvrants différents, par lesquels, pour le premier et le deuxième VLAN, les chemins respectivement actifs pour l'acheminement de datagrammes par les appareils de communication acheminant sont prescrits,
- configurer au moins un appareil (111) de communication, dupliquer des datagrammes au moins sélectionnés à envoyer et les transmettre tant par le premier VLAN qu'également par le deuxième VLAN,
- configurer au moins un appareil (121, 131, 141) de communication, contrôler des datagrammes reçus affectés aux VLAN, qui sont identiques à un datagramme déjà reçu et, en présence d'un datagramme identique déjà reçu, les rejeter.

14. Système de communication pour effectuer un procédé suivant l'une des revendications 1 à 12, dans lequel le système de communication comprend
- une installation de configuration suivant la revendication 13,
- plusieurs appareils (101-104, 112-113, 122-123, 132-133, 142-144) de communication acheminant des datagrammes (300), sur lequel est configuré respectivement un premier (201) et un deuxième réseau (202) local virtuel, VLAN,
- un appareil (111) de communication du côté émetteur, qui est agencé pour dupliquer au moins des datagrammes sélectionnés à envoyer et les transmettre tant par le premier VLAN qu'également par le deuxième VLAN,
- un appareil (121, 131, 141) de communication du côté récepteur, qui est agencé pour contrôler des datagrammes reçus affectés aux VLAN respectivement pour savoir s'ils sont identiques à un datagramme déjà reçu et, en présence d'un datagramme identique déjà reçu, les rejeter,
- dans lequel les appareils de communication acheminant des datagrammes sont en outre agencés respectivement pour déterminer pour le premier et le deuxième VLAN, en appliquant respectivement un protocole d'arbre couvrant, des arbres couvrants différents, par lesquels il est prescrit, pour le premier et le deuxième VLAN, des chemins actifs d'acheminement de datagrammes par les appareils de communication acheminant.
